# EUROPÄISCHE PATENTANMELDUNG

(11) **EP 2 939 528 A1**
(43) Veröffentlichungstag der Anmeldung: **04.11.2015**
(21) Anmeldenummer: 14166727.9
(22) Anmeldetag: 30.04.2014
(51) Int. Cl.: A01G 17/04

(54) **Anordnung mit Baumsicherung und Baumsicherungsplatte**

(71) Anmelder: H. Lorberg Baumschulerzeugnisse GmbH & Co. KG, 14669 Ketzin OT Tremmen (DE)
(72) Erfinder: Brehm, Jochen, 15741 Bestensee (DE); Lorberg, Stefan Heinrich, 14669 Ketzin (DE)
(74) Vertreter: Bittner, Thomas L.

(57) **Zusammenfassung**

Die Erfindung betrifft eine Anordnung mit Baumsicherung, mit einem Baum (1), der einen mit einem Hüllmaterial (9) eingekleideten Wurzelballen (2) und einen Stamm (3) mit endseitiger Baumkrone (4) aufweist, und einer Baumsicherungsvorrichtung, die im Erdreich (6) aufgenommen und eingerichtet ist, eine aufrechte Stellung des gepflanzten Baumes (1) zu sichern, wobei die Baumsicherungsvorrichtung mit einer Sicherungsplatte (7; 20) gebildet ist, die im Erdreich (6) in Horizontallage und so dem Baum (1) gegen Kippen aus der aufrechten Stellung sichernd angeordnet ist. Weiterhin betrifft die Erfindung eine Baumsicherungsplatte (7; 20) für eine Anordnung mit Baumsicherung, wobei deckflächenseitig rutschhemmende Elemente und / oder Haftmittel angeordnet sind.

## Beschreibung

Die Erfindung betrifft eine Anordnung mit Baumsicherung und eine Baumsicherungsplatte.

### Hintergrund

Bäume decken ihren notwendigen Nährstoffbedarf durch die Aufnahme von im Bodenwasser gelösten Nährstoffen aus dem unmittelbaren Erdreichumfeld des Wurzelköpers. Zu diesem Zweck bilden sie eine Vielzahl von Feinwurzeln, über welche dieser Nährstoffstrom fließt. Kommt dieser Strom zum Erliegen, würde dies zwangsläufig zum Absterben des Baumes führen. Bei der Neupflanzung von Baumen mit Wurzelballen ist es von besonderer Bedeutung, dem Gehölz, gerade in der Anwachsphase, einen stabilen festen Stand zu geben. Jungbäume sind aufgrund des schlanken Stammes und der hoch ansetzenden Krone schwingungswillig. Neu gebildete Feinwurzeln sollen jedoch nicht abreißen.

Zur Sicherung des aufrechten Standes von Jungbäumen wurden oberirdische Baumsicherungen vorgeschlagen. Die gebräuchlichste Form ist der Dreibock, aber auch Ein-, Zwei- und Vierböcke kommen zum Einsatz. Weiterhin sind Abspannvorrichtungen in statischer oder dynamischer Ausführung bekannt. Hierbei werden Halteseilverspannungen genutzt, bei denen gespannte Halteseile an Astgabeln des Baumes einerseits und im Erdreich andererseits befestigt werden. Im Fall der statischen Ausgestaltung kommen Halteseile fester Länge zum Einsatz. Eine dynamische Verankerung ist gebildet, wenn die Halteseile unter Beanspruchung in der Länge definiert nachgeben.

Darüber hinaus wurden unterirdische Baumsicherungsvorrichtungen vorgeschlagen. Hierzu gehören Wurzelballenverankerungssysteme oder Unterflurverankerungen, bei denen im Vergleich zu den oberirdischen Baumsicherungen störende Pfähle und Seile vermieden sind. Bei einer bekannten Baumsicherungsvorrichtung ist eine Drahtseilverspannung am Wurzelballen des Baumes vorgesehen, welche beim Pflanzen des Baumes installiert wird. Soweit die hierbei unterirdisch zum Einsatz kommenden, gespannten Drahtseile auf dem Wurzelballen aufliegen, kann dieser mittels unter die Seile gelegter Matten vor Beschädigung geschützt werden. Auch wurde als unterirdische Baumsicherung vorgeschlagen, einen Doppelspieß zu verwenden, bei dessen Anwendung eine Spießhälfte von unten in den Wurzelballen einsticht und die andere Hälfte unterhalb des Wurzelballens in das Erdreich gesteckt ist.

### Zusammenfassung

Aufgabe der Erfindung ist es, verbesserte Technologien zur Baumsicherung anzugeben, mit denen auf einfache und effiziente Weise Bäume in ihrer aufrechten Stellung gesichert werden können, insbesondere neu gepflanzte Jungbäume.

Zur Lösung sind eine Anordnung mit Baumsicherung nach dem unabhängigen Anspruch 1 sowie eine Baumsicherungsplatte nach dem unabhängigen Anspruch 15 vorgesehen. Vorteilhafte Ausgestaltungen sind Gegenstand von abhängigen Unteransprüchen.

Nach einem Aspekt ist eine Anordnung mit Baumsicherung vorgeschlagen. Die Anordnung weist einen Baum mit einem in ein Hüllmaterial eingekleideten Wurzelballen und einen Stamm mit endseitiger Baumkrone auf. Insbesondere kann es sich hierbei um einen Jungbaum handeln. Das die Wurzeln umgreifende Hüllmaterial kann ein- oder mehrschichtig ausgebildet sein. So kann der Wurzelballen mit einem Gewebematerial eingekleidet sein, welches biologisch abbaubar sein kann. Ergänzend kann das Hüllmaterial ein außenseitiges Geflecht aufweisen, zum Beispiel ein Drahtgeflecht, durch dessen Öffnungen sich das Wurzelwerk beim Wachstum entfalten kann. Die Anordnung verfügt sodann über eine Baumsicherungsvorrichtung, die im Erdreich aufgenommen und eingerichtet ist, eine aufrechte Stellung des gepflanzten Baumes zu sichern. Die Baumsicherungsvorrichtung ist mit einer Sicherungsplatte gebildet, die im Erdreich in Horizontallage und so den Baum gegen Kippen aus der aufrechten Stellung sichernd angeordnet ist.

Nach einem weiteren Aspekt ist eine Baumsicherungsplatte für die vorangehend beschriebene Anordnung vorgesehen, wobei deckflächenseitig rutschhemmende Elemente und / oder Haftmittel angeordnet sind.

Die Sicherungsplatte kann eine runde oder eckige Grundfläche aufweisen, zum Beispiel eine viereckige Grundfläche.

Die Sicherungsplatte kann vollständig ins Erdreich eingebettet sein. Die Sicherungsplatte ist bei dieser Ausführung allseitig wenigstens teilweise in das Erdreich eingebettet. Es kann vorgesehen sein, dass lediglich ein vom aufliegenden Wurzelballen bedeckter Bereich der Sicherungsplatte vom direkten Kontakt mit dem umgebenden Erdreich ausgenommen ist.

Bei einer Ausgestaltung kann vorgesehen sein, dass die Sicherungsplatte einen oder mehrere Plattenabschnitte aufweist, die ein Durchdrainieren von Wasser zulassend ausgeführt sind. Hierdurch ist es ermöglicht, dass Wasser, welches auf die Deckfläche der Sicherungsplatte gelangt, durch diese hindurch nach unten abgeleitet wird. Die Sicherungsplatte kann ein oder mehrere Plattenabschnitte aufweisen, die für deckseitig auftreffendes Wasser stauend gebildet sind. In diesem Staubereichen kann das deckseitig auf die Sicherungsplatte gelangende Wasser nicht durch diese hindurch treten und wird insoweit deckseitig gestaut. Die Sicherungsplatte kann über ihre gesamte Fläche das Durchdrainieren von Wasser zulassen. Alternativ kann die Sicherungsplatte gesamtflächig wasserstauend ausgeführt sein. Das Durchdrainieren von Wasser kann ermöglicht sein, indem die Sicherungsplatte ein oder mehrere Durchbrüche aufweist, die sich in einem randseitigen und / oder mittigen Teilabschnitt der Sicherungsplatte konzentrieren können. In einer Ausgestaltung können die das Durchdrainieren von Wasser zulassende Plattenabschnitte aus einem porösem Material bestehen, in welchem Poren gebildet sind, die den Durchgang des Wassers von der Deckseite durch die Sicherungsplatte hindurch ermöglichen. Eine solche Ausgestaltung kann mittels einer Kiesplatte gebildet sein, bei der ein Sand- oder Kiesmaterial mit einem Haft- oder Klebemittel, zum Beispiel einem Mehrkomponentenklebemittel, vergossen ist. Nach dem Aushärten des Haft- oder Klebemittels, welches Harzkomponenten enthalten kann, ist eine poröse Plattenstruktur hergestellt, durch die hindurch Wasser von der Deckseite hindurchgelangen kann.

Eine Ausführungsform sieht vor, dass der Wurzelballen auf der Deckfläche der Sicherungsplatte steht und hierauf gegen seitliches Verrutschen gesichert lagert, derart, dass eine seitliche Verschiebung des Wurzelballens relativ zur Deckfläche gehemmt oder ganz ausgeschlossen ist. Die Sicherungsplatte kann einen rutschhemmenden Plattenabschnitt und einen Plattenabschnitt aufweisen, insbesondere außenliegend, welcher nicht zur Verrutschsicherung beiträgt, sondern vom Erdreich bedeckt ist und insoweit der Sicherung der Lage der Sicherungsplatte im Erdreich dient. In einer Ausführungsform kann der rutschhemmende Plattenabschnitt den mittleren Bereich der Sicherungsplatte angeordnet sein und umlaufend von dem nicht zur Rutschhemmung beitragenden Plattenabschnitt umgeben sein. Der nicht zur rutschhemmenden Sicherung beitragende Plattenabschnitt kann sich seitlich über den Wurzelballen hinaus ins Erdreich erstrecken.

Zumindest das Hüllmaterial des Wurzelballens kann mit deckflächenseitigen, rutschhemmenden Elementen an der Sicherungsplatte im Eingriff steht. Das Zusammenwirken von Hüllmaterial und deckflächenseitigen, rutschhemmenden Elementen, die im rutschhemmenden Plattenabschnitt angeordnet sein können, sichert den Wurzelballen gegen ein seitliches Verrutschen auf der Sicherungsplatte.

Eine Ausgestaltung kann vorsehen, dass die deckflächenseitigen, rutschhemmenden Elemente mit wenigstens eines der folgenden Strukturelemente aufweisen: Vorsprung, Dorn, Zapfen, Haken und flächige Oberflächenaufrauhung. Die Strukturelemente können einzeln oder als Gruppe auf der Deckfläche der Sicherungsplatte angeordnet sein. Hierbei können die Strukturelemente fest und nicht lösbar an der Sicherungsplatte gebildet sein. Bevorzugt erfassen die Strukturelemente nur das Hüllmaterial, ohne in den Wurzelballen an sich einzugreifen.

Am Wurzelballen einerseits und deckflächenseitig an der Sicherungsplatte andererseits können Haftmittel gebildet sein, mit denen eine Sicherungshaftverbindung zwischen Wurzelballen und Sicherungsplatte hergestellt ist. Die Haftverbindung kann lösbar oder nicht lösbar ausgeführt sein. Die am Wurzelballen und an der Sicherungsplatte gebildeten Haftmittel wirken zusammen, wenn der Wurzelballen beim Pflanzen des Baumes auf die Sicherungsplatte gestellt wird, wodurch die Sicherungshaftverbindung ausgebildet wird. Am Wurzelballen können die Haftmittel am Hüllmaterial angeordnet sein, vorzugsweise außenseitig. Die Haftmittel können sich am Wurzelballen und / oder an der Sicherungsplatte flächig erstrecken.

Bei einer Ausgestaltung kann vorgesehen sein, dass die Haftmittel Klettbandabschnitte aufweisen. Die Haftmittel können Streifen- und / oder Matten-Klettbandabschnitte aufweisen. Am Wurzelballen können ein oder mehrere Klettbandabschnitte auf das Hüllmaterial aufgeklebt oder aufgenäht sein. Die Befestigung von Klettbandabschnitten an der Sicherungsplatte kann mittels Kleben erfolgen.

Die Sicherungsplatte kann deckflächenseitig mit einer umlaufend Randerhöhung gebildet ist. Die umlaufende Randerhöhung kann durchgehend oder unterbrochen gebildet sein. Mit Hilfe der Randerhöhung kann auf der Deckseite der Sicherungsplatte ein Stauraum für aus dem Erdreich auf die Sicherungsplatte gelangendes Wasser gebildet sein.

Bevorzugt sieht eine Fortbildung vor, dass die Sicherungsplatte ergänzend im Erdreich verankert ist. Die Sicherungsplatte kann auf diese Weise zusätzlich im Erdreich verankert werden, zum Beispiel mit Hilfe von Domen oder Zapfen, die durch Öffnungen in der Sicherungsplatte hindurch ins Erdreich gesteckt werden. Auch eine Seilspannung, bei Seile an der Platte angreifen, kann vorgesehen sein. Alternativ oder ergänzend können Vorsprünge auf der Bodenfläche der Sicherungsplatte gebildet sein, die sich beim Auflegen in der Sicherungsplatte auf das Erdreich in dieses hinein erstrecken. Solche bodenflächenseitigen Vorsprünge können zum Beispiel in Eckbereichen und / oder anderen außenliegenden Randbereichen der Sicherungsplatte vorgesehen sein.

Die Sicherungsplatte kann zumindest abschnittsweise aus einem biologisch abbaubaren Material bestehen. Biologisch abbaubare Materialien sind als solche in verschiedenen Ausführungsformen bekannt, beispielsweise auch in Form von biologisch abbaubaren Kunststoffen. Auch Recyclingmaterialien können zum Einsatz kommen. Alternativ kann die Sicherungsplatte aus Metall, Kunststoff oder Holz oder einer Kombination hiervon bestehen.

Eine Weiterbildung kann vorsehen, dass die Sicherungsplatte in Blickrichtung von oben allseitig über den Wurzelballen übersteht.

Die Sicherungsplatte kann oberhalb des Wurzelballens im Erdreich angeordnet sein, derart, dass der Stamm durch eine Plattenöffnung geführt ist. Die Sicherungsplatte oberhalb des Wurzelballens kann alternativ oder ergänzend zur Sicherungsplatte unterhalb des Wurzelballens vorgesehen sein. Um einen Wasser- und Nährstoffzufluss für den Wurzelballen zu ermöglichen, ist die Sicherungsplatte bei der Anordnung oberhalb des Wurzelballens bevorzugt aus einem porösen Material oder weist Drainageöffnungen auf. In einer Ausgestaltung besteht die Sicherungsplatte aus einem Kiesmaterial, welches mit einem Klebe- oder Haftmittel vergossen ist.

Bei einer Ausgestaltung kann vorgesehen sein, dass die Sicherungsplatte deckseitig freiliegend ins Erdreich eingebettet ist.

Bei einer Ausgestaltung kann die Sicherungsplatte mit einem umlaufenden Rahmen gebildet sind, welcher in Draufsicht zum Beispiel eine eckige oder eine runde Fläche aufweisen kann. Die vom Rahmen umfasste Fläche ist mit einem Spannmaterial ausgefüllt, welches mittels des Rahmens aufgespannt ist. Zum Beispiel kann ein Netz- oder Gazematerial zum Einsatz kommen, insbesondere aus einem synthetischen Material. Aber ein biologisch abbaubares Material kann verwendet werden. Auf der Deckfläche können Haft- und / oder Klebemittel aufgebracht sein, zum Beispiel Klettbandabschnitte.

### Beschreibung von Ausführungsbeispielen

Im Folgenden werden Ausführungsbeispiele unter Bezugnahme auf Figuren einer Zeichnung erläutert. Hierbei zeigen:
- Fig. 1: eine schematische Darstellung einer Anordnung mit einem Baum und einer Baumsicherungsvorrichtung, welche mit einer Sicherungsplatte gebildet ist, die unterhalb eines Wurzelballens angeordnet ist,
- Fig. 2: eine schematische Darstellung der Anordnung aus Fig. 1, wobei ein zuvor ausgehobenes Loch im Erdreich zugeschüttet ist,
- Fig. 3: eine schematische Darstellung von Ausführungen einer Sicherungsplatte im Querschnitt und
- Fig. 4: eine Anordnung mit einem Baum und einer Baumsicherungsvorrichtung, bei dem eine Sicherungsplatte oberhalb des Wurzelballens angeordnet ist.

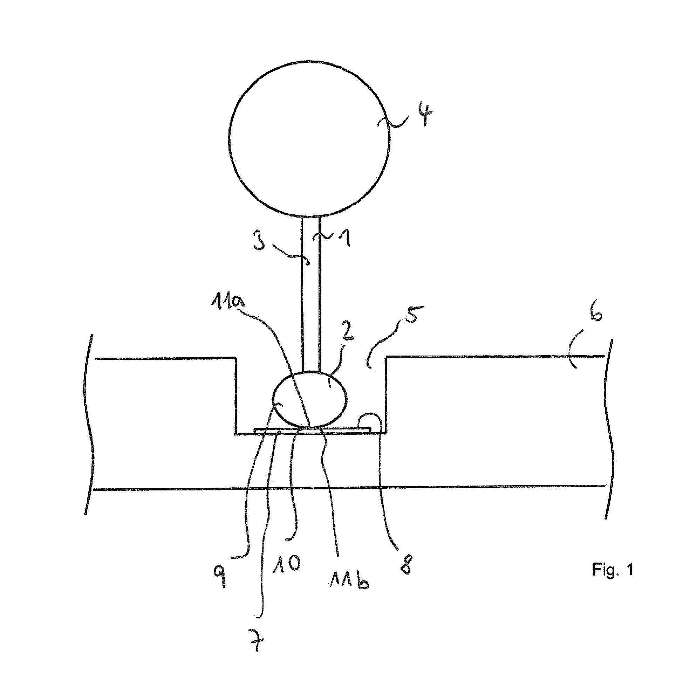

Fig. 1 zeigt eine schematische Darstellung einer Anordnung mit Baumsicherung mit einem Baum 1, der einen Wurzelballen 2 und einen Stamm 3 mit endseitiger Baumkrone 4 aufweist. Zum Pflanzen des Baumes 1 ist in einem Loch 5 im Erdreich 6 eine Sicherungsplatte 7 angeordnet, auf deren Deckfläche 8 der Wurzelballen 2 steht. Der Wurzelballen 2 ist von einem Hüllmaterial 9 umgeben.

Der Wurzelballen 2 ist auf der Sicherungsplatte 7 gegen seitliches Verrutschen gesichert, indem zwischen dem Wurzelballen 2, insbesondere dessen Hüllmaterial 9, und der Sicherungsplatte 7 eine Haftverbindung 10 ausgebildet ist. Bei der gezeigten Ausführungsform ist die Haftverbindung 10 mit Hilfe von Klettbandabschnitten 11a, 11b hergestellt, die auf der Deckfläche 8 der Sicherungsplatte 7 einerseits und am Hüllmaterial 9 des Wurzelballens 2 andererseits angeordnet sind. Mit den Klettbandabschnitten 11a, 11b können Streifen oder eine Matte am Wurzelballen 2 und / oder der Sicherungsplatte 7 gebildet sein.

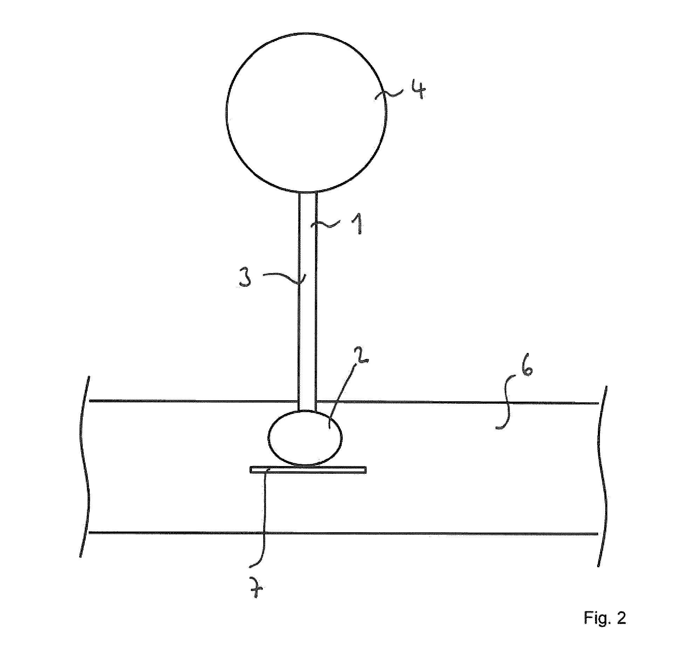

Fig. 2 zeigt die Anordnung aus Fig. 1, wobei das Loch 5 nun mit Erde gefüllt ist.

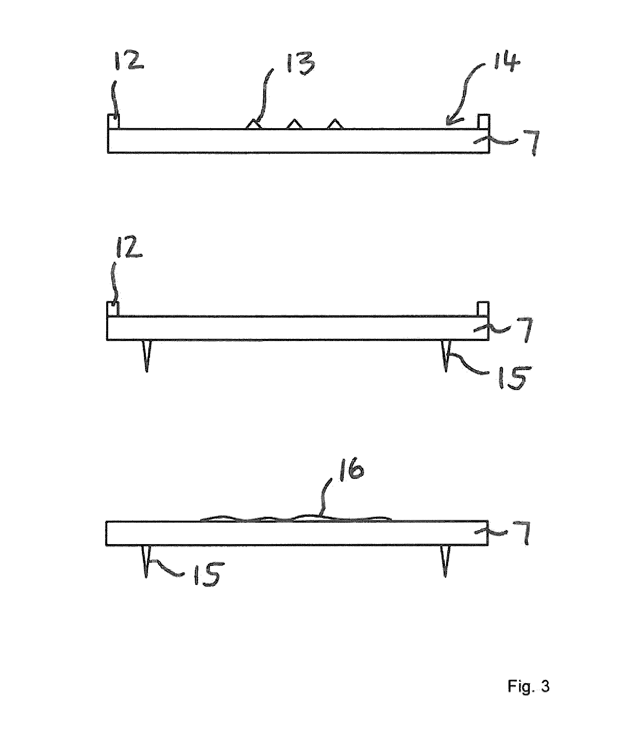

Alternativ oder ergänzend kann die Haftverbindung 10 mit Hilfe von deckseitigen Strukturelementen auf der Deckseite der Sicherungsplatte 7 gebildet sein. Fig. 3 zeigt im oberen Bild eine schematische Darstellung einer Sicherungsplatte 7 im Querschnitt, bei der eine umlaufende Randerhöhung 12 und deckflächenseitige Strukturelemente 13 vorgesehen ist, wobei letztere mit dem Hüllmaterial 9 im Eingriff stehen, wenn der Wurzelballen 2 auf der Sicherungsplatte 7 steht. Mittels der umlaufenden Randerhöhung 12 ist auf der Sicherungsplatte 7 ein Stauraum 14 für durch das Erdreich 6 zur Deckfläche 8 der Sicherungsplatte 7 gelangendes Wasser gebildet.

Fig. 3 zeigt weitere Ausgestaltungen der Sicherungsplatte 7 im Querschnitt mit bodenseitigen Domen 15 zur zusätzlichen Verankerung der Sicherungsplatte 7 im Erdreich. In einer Ausgestaltung (unteres Bild in Fig. 3) ist zur Rutschhemmung eine deckseitige Aufrauhung oder Strukturierung 16 vorgesehen, auf die beim Pflanzen der Wurzelballen 2 aufgesetzt wird.

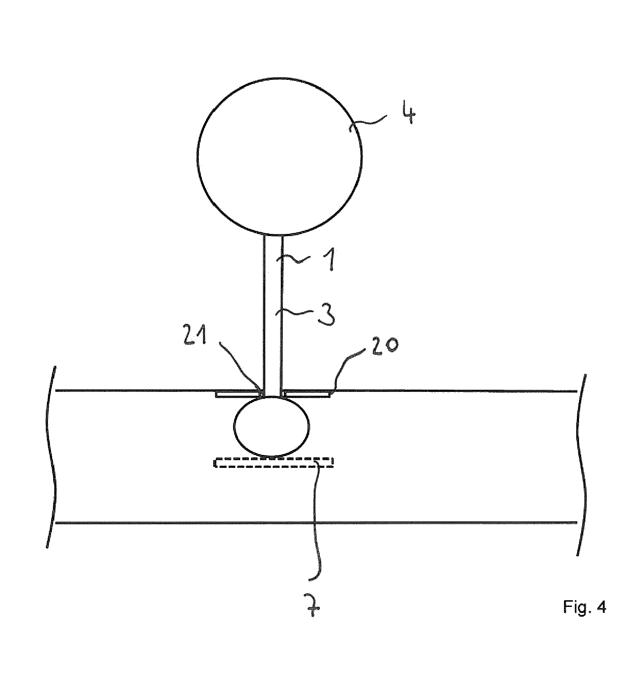

Fig. 4 zeigt eine Anordnung, bei der eine obere Sicherungsplatte 20 oberhalb des Wurzelballens 2 angeordnet ist. Der Stamm 3 des Baumes 1 durchgreift eine zugeordnete Öffnung 21 in der oberen Sicherungsplatte 20. Die obere Sicherungsplatte 20 ist aus einem porösen Material, derart, dass auf die obere Sicherungsplatte 20 gelangendes Wasser durch diese hindurch ins Erdreich 6 zum Wurzelballen 2 hin gelangen kann. Hierzu besteht die obere Sicherungsplatte 20 aus einem Kiesmaterial, welches mit einem flüssigen Haft- oder Klebemittel vergossen ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung mit Baumsicherung, mit
- einem Baum (1), der einen mit einem Hüllmaterial (9) eingekleideten Wurzelballen (2) und einen Stamm (3) mit endseitiger Baumkrone (4) aufweist, und
- einer Baumsicherungsvorrichtung, die im Erdreich (6) aufgenommen und eingerichtet ist, eine aufrechte Stellung des gepflanzten Baumes (1) zu sichern,
wobei die Baumsicherungsvorrichtung mit einer Sicherungsplatte (7; 20) gebildet ist, die im Erdreich (6) in Horizontallage und so dem Baum (1) gegen Kippen aus der aufrechten Stellung sichernd angeordnet ist.

2. Anordnung nach Anspruch 1, **dadurch gekennzeichnet, dass** die Sicherungsplatte (7; 20) vollständig ins Erdreich (6) eingebettet ist.

3. Anordnung nach Anspruch 1 oder 2, **dadurch gekennzeichnet, dass** die Sicherungsplatte (7; 20) einen oder mehrere Plattenabschnitte aufweist, die ein Durchdrainieren von Wasser zulassend ausgeführt sind.

4. Anordnung nach mindestens einem der vorangehenden Ansprüche, **dadurch gekennzeichnet, dass** der Wurzelballen (2) auf der Deckfläche (8) der Sicherungsplatte (7) steht und hierauf gegen seitliches Verrutschen gesichert lagert, derart, dass eine seitliche Verschiebung des Wurzelballens (2) relativ zur Deckfläche (8) gehemmt oder ganz ausgeschlossen ist.

5. Anordnung nach Anspruch 4, **dadurch gekennzeichnet, dass** zumindest das Hüllmaterial (9) des Wurzelballens (2) mit deckflächenseitigen, rutschhemmenden Elementen an der Sicherungsplatte (7) im Eingriff steht.

6. Anordnung nach Anspruch 5, **dadurch gekennzeichnet, dass** die deckflächenseitigen, rutschhemmenden Elemente wenigstens eines der folgenden Strukturelemente aufweisen: Vorsprung, Dorn, Zapfen, Haken und flächige Oberflächenaufrauhung.

7. Anordnung nach mindestens einem der Ansprüche 4 bis 6, **dadurch gekennzeichnet, dass** am Wurzelballen (2) einerseits und deckflächenseitig an der Sicherungsplatte (7) andererseits Haftmittel (11a, 11b) gebildet sind, mit denen eine Sicherungshaftverbindung zwischen Wurzelballen (2) und Sicherungsplatte (7) hergestellt ist.

8. Anordnung nach Anspruch 7, **dadurch gekennzeichnet, dass** die Haftmittel Klettbandabschnitte aufweisen.

9. Anordnung nach mindestens einem der vorangehenden Ansprüche, **dadurch gekennzeichnet, dass** die Sicherungsplatte (7) deckflächenseitig mit einer umlaufend Randerhöhung (12) ausgebildet ist.

10. Anordnung nach mindestens einem der vorangehenden Ansprüche, **dadurch gekennzeichnet, dass** die Sicherungsplatte (7) ergänzend im Erdreich (6) verankert ist.

11. Anordnung nach mindestens einem der vorangehenden Ansprüche, **dadurch gekennzeichnet, dass** die Sicherungsplatte (7) zumindest abschnittsweise aus einem biologisch abbaubaren Material besteht.

12. Anordnung nach mindestens einem der vorangehenden Ansprüche, **dadurch gekennzeichnet, dass** die Sicherungsplatte (7) in Blickrichtung von oben allseitig über den Wurzelballen (2) übersteht.

13. Anordnung nach mindestens einem der Ansprüche 1 bis 3, **dadurch gekennzeichnet, dass** die Sicherungsplatte (20) oberhalb des Wurzelballens (2) im Erdreich (6) angeordnet ist, derart, dass der Stamm (3) durch eine Plattenöffnung (21) geführt ist.

14. Anordnung nach Anspruch 13, **dadurch gekennzeichnet, dass** die Sicherungsplatte (20)deckseitig freiliegend ins Erdreich eingebettet ist.

15. Baumsicherungsplatte (7; 20) für eine Anordnung nach mindestens einem der vorangehenden Ansprüche, wobei deckflächenseitig rutschhemmende Elemente und / oder Haftmittel angeordnet sind.

## Geänderte Patentansprüche

### Geänderte Patentansprüche gemäss Regel 137(2) EPÜ.

1. Anordnung mit Baumsicherung, mit
- einem Baum (1), der einen mit einem Hüllmaterial (9) eingekleideten Wurzelballen (2) und einen Stamm (3) mit endseitiger Baumkrone (4) aufweist, und
- einer Baumsicherungsvorrichtung, die im Erdreich (6) aufgenommen und eingerichtet
ist, eine aufrechte Stellung des gepflanzten Baumes (1) zu sichern,
wobei die Baumsicherungsvorrichtung mit einer Sicherungsplatte (7) gebildet ist, die im Erdreich (6) in Horizontallage und so dem Baum (1) gegen Kippen aus der aufrechten Stellung sichernd angeordnet ist, und wobei der Wurzelballen (2) auf der Deckfläche (8) der Sicherungsplatte (7) steht und hierauf gegen seitliches Verrutschen gesichert lagert, derart, dass eine seitliche Verschiebung des Wurzelballens (2) relativ zur Deckfläche (8) gehemmt oder ganz ausgeschlossen ist, **dadurch gekennzeichnet, dass** am Wurzelballen (2) einerseits und deckflächenseitig an der Sicherungsplatte (7) andererseits Haftmittel (11a, 11b) gebildet sind, mit denen eine Sicherungshaftverbindung zwischen Wurzelballen (2) und Sicherungsplatte (7) hergestellt ist und die Klettbandabschnitte aufweisen.

2. Anordnung nach Anspruch 1, **dadurch gekennzeichnet, dass** die Sicherungsplatte (7) vollständig ins Erdreich (6) eingebettet ist.

3. Anordnung nach Anspruch 1 oder 2, **dadurch gekennzeichnet, dass** die Sicherungsplatte (7) einen oder mehrere Plattenabschnitte aufweist, die ein Durchdrainieren von Wasser zulassend ausgeführt sind.

4. Anordnung nach mindestens einem der vorangehenden Ansprüche, **dadurch gekennzeichnet, dass** zumindest das Hüllmaterial (9) des Wurzelballens (2) mit deckflächenseitigen, rutschhemmenden Elementen an der Sicherungsplatte (7) im Eingriff steht.

5. Anordnung nach Anspruch 4, **dadurch gekennzeichnet, dass** die deckflächenseitigen, rutschhemmenden Elemente wenigstens eines der folgenden Strukturelemente aufweisen: Vorsprung, Dom, Zapfen, Haken und flächige Oberflächenaufrauhung.

6. Anordnung nach mindestens einem der vorangehenden Ansprüche, **dadurch gekennzeichnet, dass** die Sicherungsplatte (7) deckflächenseitig mit einer umlaufend Randerhöhung (12) ausgebildet ist.

7. Anordnung nach mindestens einem der vorangehenden Ansprüche, **dadurch gekennzeichnet, dass** die Sicherungsplatte (7) ergänzend im Erdreich (6) verankert ist.

8. Anordnung nach mindestens einem der vorangehenden Ansprüche, **dadurch gekennzeichnet, dass** die Sicherungsplatte (7) zumindest abschnittsweise aus einem biologisch abbaubaren Material besteht.

9. Anordnung nach mindestens einem der vorangehenden Ansprüche, **dadurch gekennzeichnet, dass** die Sicherungsplatte (7) in Blickrichtung von oben allseitig über den Wurzelballen (2) übersteht.

10. Anordnung nach mindestens einem der Ansprüche 1 bis 3, **dadurch gekennzeichnet, dass** eine weitere Sicherungsplatte (20) oberhalb des Wurzelballens (2) im Erdreich (6) angeordnet ist, derart, dass der Stamm (3) durch eine Plattenöffnung (21) geführt ist.

11. Anordnung nach Anspruch 10, **dadurch gekennzeichnet, dass** die weitere Sicherungsplatte (20) deckseitig freiliegend ins Erdreich eingebettet ist.

12. Baumsicherungsplatte (7) für eine Anordnung nach mindestens einem der vorangehenden Ansprüche, wobei deckflächenseitig rutschhemmende Elemente und / oder Haftmittel angeordnet sind, die Klettbandabschnitte aufweisen.
